# EUROPEAN PATENT APPLICATION

(11) **EP 2 228 732 A2**
(43) Date of publication of application: **15.09.2010**
(21) Application number: 10155659.5
(22) Date of filing: 05.03.2010
(51) Int. Cl.: G06F 15/02

(54) **Electronic book**

(30) Priority: 09.03.2009 US 400280
(71) Applicant: Sony Corporation, Minato-ku Tokyo 108-0075 (JP); Sony Electronics Inc., Park Ridge, NJ 07656 (US)
(72) Inventor: Connors, Kirstin, San Diego, CA 92128 (US); Doyle, Paul, San Marcos, CA 92078 (US); Viera, Wendy, San Diego, CA 92172 (US)
(74) Representative: Scaddan, Gareth Casey

(57) **Abstract**

An electronic book synchronizes visual segments in a visual file with the start of respective sentences in an audio file corresponding to the visual segments so that if the user switches from visual to audio the audio does not start mid-sentence. Visual segments in the video file may be linked to the start of a page in the audio file.

## Description

### Field of the Invention

The present invention relates generally to electronic books.

### Background of the Invention

Electronic books have been provided in which a person can read electronic book files stored on a storage medium in a compact, hand-held housing. Text is presented on a display of the housing, and more than a single electronic book can be stored on the storage medium. In this way, a person can in effect transport a large number of books for reading at the person's leisure in a single lightweight electronic book form factor. As recognized herein, such electronic books can be made even more convenient and user-friendly.

### Summary of the Invention

Various respective aspects and features of the invention are defined in the appended claims. Combinations of features from the dependent claims may be combined with features of the independent claims as appropriate and not merely as explicitly set out in the claims.

In one example, an electronic book includes a housing, a visual display supported on the housing, and one or more audio output devices, such as speakers or a headphone jack, on the housing. A digital processor is in the housing in communication with the visual display and audio output device, Also, a tangible computer-reader storage medium is in the housing and is accessible to the processor or input/output interface such as a universal serial bus (USB) interface. Electronic book files are stored on the medium for presentation of book information under control of the processor.

The processor may execute logic that includes receiving a user selection of a format in which to present an electronic book, and in response to a selection of an audio format, playing an audio file corresponding to a selected electronic book on the audio output device and establishing a bookmark in a visual file corresponding to the selected audio file at a top of a page in the visual file corresponding to a last-spoken word in the audio file. In contrast, in response to a selection of a visual mode, the logic includes presenting text from a visual file corresponding to a selected electronic book on the display and establishing a bookmark in an audio file corresponding to the selected video file at the start of a sentence in the audio file containing the text of the visual file that was presented on the display upon receipt of a signal to change mode or power down such that the corresponding audio file does not subsequently start mid-sentence upon invocation of the electronic book in the audio format.

In example embodiments an audio file being played has control of the bookmark in the corresponding video file. Likewise, a video file being played may have control of the bookmark in the corresponding audio file.

In some example implementations a user can select a page location in the visual file to bookmark when an audio file is terminated. The page in the visual file corresponding to the last-spoken word in the audio file can be the page containing the last-spoken word. Or, the page in the visual file corresponding to the last-spoken word in the audio file can be a page "n" pages prior to the page in the video file containing the last-spoken word, wherein "n" is an integer.

If desired, both the audio file and visual file may be executed simultaneously, as the user listens to the audio file while reading the visual file. Control of the bookmark may remain with the audio file, so that if a user skips ahead in the visual file, the audio file maintains a bookmark at a location in the audio file being played when a "skip" signal is received. Or, the opposite bookmark control may be established, i.e., control may remain with the visual file so that if a user skips ahead in the audio file, the visual file maintains a bookmark at a location in the visual file being displayed when a "skip" signal is received in the audio file. The user may be given the option of selecting which file maintains bookmark control when both files are played simultaneously.

In another embodiment, an electronic book includes a housing, a visual display supported on the housing, and one or more audio output devices on the housing. A digital processor is in the housing in communication with the visual display and audio output device. Also, a tangible computer-reader storage medium is in the housing and is accessible to the processor. Electronic book files are stored on the medium for presentation of book information under control of the processor.

The medium can store a data structure that is accessible to the processor and that synchronizes an audio file with a related visual file at least in part by indexing each text segment in the visual file with a start of a nearest sentence in the audio file containing text in the segment of the visual file. Thus, a text segment comprising the first "n" words in the visual file is linked to the start of the first sentence in the audio file, the next (n through m) words in the visual file are linked to a start of a second sentence in the audio file, etc. In this way, each and every word in the visual file need not be linked to a respective unique word in the audio file, but instead groups of words in the visual file are linked as a group to a single place in the audio file.

In another embodiment, an electronic book includes a housing, a visual display supported on the housing, and one or more audio output devices on the housing. A digital processor is in the housing in communication with the visual display and audio output device. Also, a tangible computer-reader storage medium is in the housing and is accessible to the processor. Electronic book files are stored on the medium for presentation of book information under control of the processor.

In this latter embodiment, visual segments in a visual file are correlated to respective starts of respective sentences in an audio file corresponding to the visual segments so that if a user switches from visual mode to audio mode the audio mode does not start mid-sentence. On the other hand, each segment in the audio file is linked to a start of a page in the visual file. It may now be readily appreciated that the audio-to-visual link grouping can be different than the visual-to-audio link grouping, i.e., that the bookmark is not necessarily symmetric.

### Brief Description of the Drawings

Embodiments of the invention will now be described with reference to the accompanying drawings, throughout which like parts are referred to by like references, and in which:
Figure 1 is a perspective view of an example electronic book in the closed configuration;
Figure 2 is a perspective view showing the electronic book of Figure 1 in the open configuration;
Figure 3 is a perspective view of an example electronic book with the processor, storage medium, and transceivers shown schematically;
Figure 4 is example logic in accordance with present principles; and
Figure 5 is a schematic diagram of an example data structure for synchronizing the audio file and visual file.

### Description of the Example Embodiments

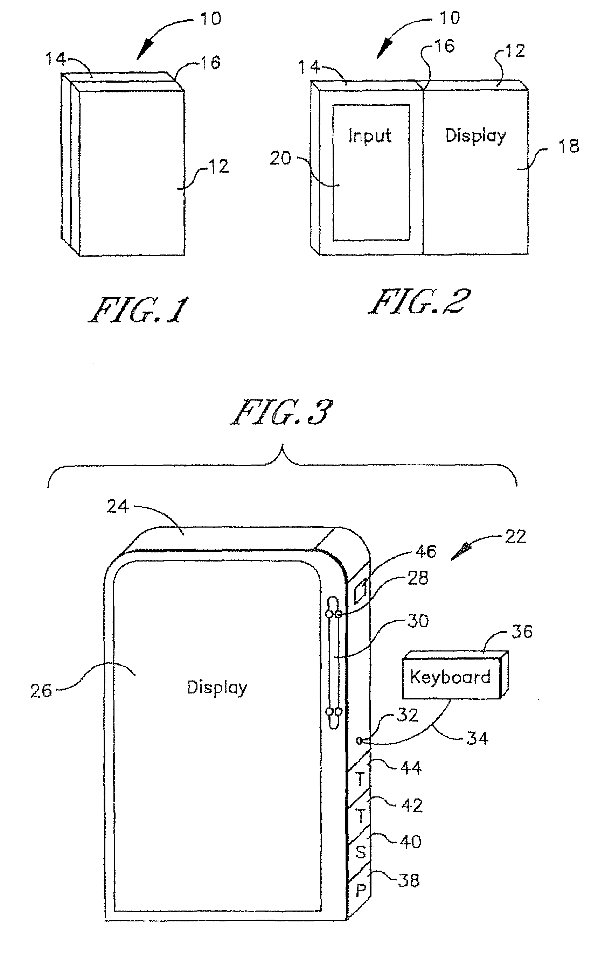

Referring initially to Figures 1 and 2, an example electronic book 10 is shown that can have, in one embodiment, a foldable configuration to mimic opening and closing a paper book. Specifically, the electronic book 10 may have a rigid lightweight plastic "cover" member 12 joined to a rigid lightweight plastic "back" member 14 along a hinge 16 for movement between an open configuration (Figure 2), wherein an electronic display 18 of the "cover" member 12 is exposed for viewing, and a closed configuration (Figure 1), wherein the display 18 is not exposed because it lies flush against the inside surface of the "back" member 14. If desired, an input device 20 such as a keyboard and/or mouse or other cursor control/point and click device may be provided on, e.g., the "back" member 14.

Figure 3 shows an example electronic book 22 that may not be foldable in contrast to the book 10 in Figures 1 and 2, it being understood that the book 10 shown in Figures 1 and 2 may incorporate the features of the electronic book 22 shown in Figure 3 in, e.g., the "cover" member 12 of the book 10. The electronic book 22 includes a lightweight portable plastic housing 24 bearing an electronic display 26 that may be a touch screen display. Accordingly, if desired the housing 24 may include one or more stylus holders 28 such as plastic clips for holding an elongated rigid typically plastic stylus 30, e.g., vertically on the housing with respect to the "top" and "bottom" of the housing, for use in inputting signals on the display 26 when it is a touch screen display. Without limitation the display 26 may be a liquid crystal display (LCD), light emitting diode display (LED), or other appropriate electronic display technology.

If desired, the housing 24 may be formed with a keyboard cord receptacle 32 for receiving a connector of a cord 34 of a keyboard 36. Thus, the keyboard 36 may be selectively engaged and disengaged with the housing 24 as desired to enable a person to enter signals to a digital processor 38 within the housing 24. In turn, the processor 38 can access a tangible computer-reader storage medium 40 such as but not limited to disk-based storage and/or solid state storage to execute logic herein.

Electronic book files can also be stored on the medium 40. One or more of the book files can be bifurcated into a visual file, which can be executed by the processor 38 to present text on the display 26, and an audio file, which can be executed by the processor 38 to output an audible voice on the below-described speaker reading words correlated to the text of the visual file, it being understood that the words read by the speaker and recorded on the audio file need not necessarily be verbatim the words of the text of the visual file. Regardless, the visual file is cross-correlated with the associated audio file as described further below.

In example non-limiting embodiments the processor 38 may control the display 26 to present user interfaces including a list of titles stored on the medium 40, command input elements to support various features, book text from files on the medium 40, and when the display 26 is a touch screen display, an image of an input device such as a keyboard with which the user can input alpha-numeric signals using, e.g., the stylus 30.

In some non-limiting embodiments the processor 38 may communicate with one or more wireless transceivers. In the embodiment shown in Figure 3, the processor 38 communicates with a long-range wireless transceiver 42 and a short-range wireless transceiver 44. Without limitation the short-range transceiver 44 may be a Bluetooth transceiver or other short-range high bandwidth transceiver technology and the long-range transceiver 42 may be a Wi-Fi transceiver or ultra wideband (UWB) transceiver or wireless telephony transceiver or other appropriate transceiver.

The processor 38 may also control one or more audio output devices 46 such as speakers or headphone jacks on the housing 24 as shown.

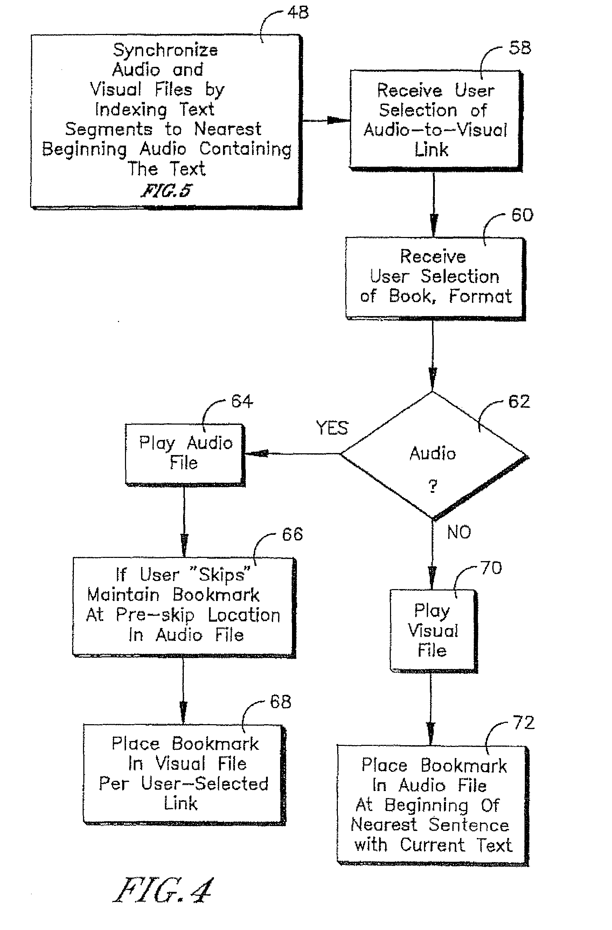

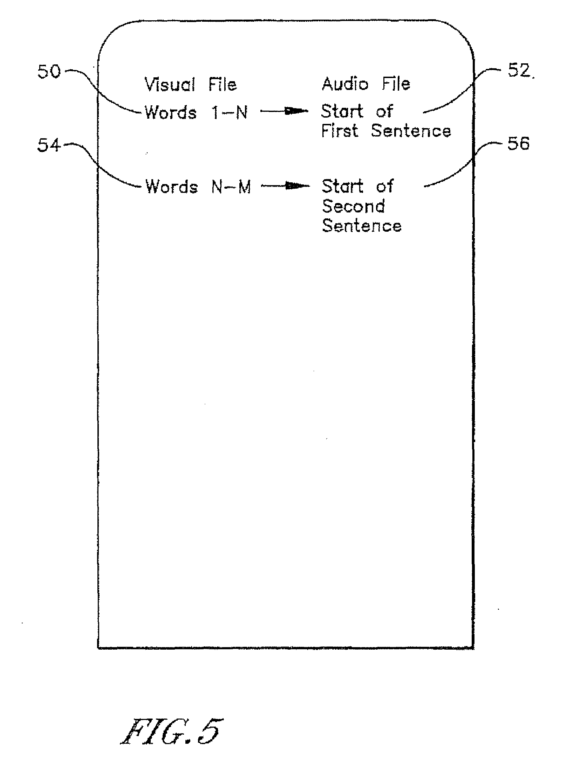

Now referring to Figure 4, for an e-book with an audio file and a visual file, the two related files are synchronized at block 48 by indexing text segments in the visual file with corresponding sentences in the audio file, preferably by indexing each text segment in the visual file with the start of the nearest audio file sentence containing text in the segment of the visual file. Thus and in reference to Figure 5, the text segment 50 comprising the first "n" words in the visual file are linked to the start 52 of the first sentence in the audio file. The next (n through m) words 54 in the visual file are linked to the start 56 of the second sentence in the audio file, and so on. In other words, each and every word in the visual file need not be linked to a respective unique word in the audio file, but instead groups of words in the visual file are linked as a group to a single place - the beginning of a corresponding sentence - in the audio file, for purposes to be shortly disclosed.

Returning to Figure 4, in some embodiments at block 58 the e-book can receive a user selection of an audio-to-visual file link preference. For example, a default preference may be presented on the display 26 along with other options. Among the default preference and other options are grouping segments of the audio file and correlating those segments with a single location in the visual file, e.g., the top of the page in the visual file corresponding to the audio segment containing a reading of words (or other subject matter such as a condensed audio rendering of the entire page) on the page of the visual file. Or, the user might select to correlate each audio file segment with the previous section in the visual file, i.e., with the start of a page "n" pages earlier than the page bearing the words (or subject matter) of the audio file segment. Or, each audio file sentence may be linked to the start of the first complete sentence in a last-viewed page of the visual file. These correlations may also be maintained in the data structure shown in Figure 5. In any case, each and every word in the audio file need not be linked to a respective unique word in the visual file, but instead groups of words in the audio file can be linked as a group to a single place - the beginning of a corresponding page - in the visual file,

Another user selection presented at block 58 may be to select which file, audio or visual, maintains bookmark control when both files are selected for play simultaneously, i.e., to permit a user to listen to the audio file while reading the associated visual file. Thus, for example, if the user selects "audio control " (likewise, if "audio control" is the default setting), the audio file maintains control of a bookmark in the audio file such that that if the user skips ahead in the visual file, the audio file maintains a bookmark at a location in the audio file being played when a "skip" signal is received in the visual file (causing the visual file presentation to skip ahead or back by a predetermined amount of material such as a page), and vice-versa when "video control" is selected. Or, the user may be given the option of selecting not to maintain the bookmark in the event of a skip.

In operation, at block 60 in Figure 4 a user selects a book and a format (audio or visual, or if desired a third selection of "both"). This selection may be facilitated by presenting a list of available titles on the display 26 and in response to a selection of a title, if the title includes both an audio and visual file, a prompt can be presented on the display 26 to select "audio" or "visual" or "both".

Once the book and format selections have been received, decision diamond 62 simply indicates that for an audio file, the file is played on the audio output device 46 at block 64. At block 66, if a user skips ahead or back in the audio file using, e.g., a "skip" selector element that may be presented on the display 26, the audio file maintains a bookmark at the location in the audio file being played when the "skip" signal was received. In this way, if the user subsequently turns off the e-book or decides to return (using, e.g., a "back" selector element on the display 26) to the last location in the event that, e.g., the user becomes lost in the pages, play of the audio file can resume at the last (bookmarked) location.

Control of the bookmark may remain with the audio file until such time as a "return to bookmark" function is called, e.g., a key on the ebook that is dedicated to that purpose is manipulated, or the visual file utility is invoked, or the e-book is turned off and on. Accordingly, at block 68, if the return to bookmark function is called (by, e.g., turning off the e-book), just prior to deenergizing the bookmark is placed in the audio file at, e.g., the start of the last-played sentence and in the visual file at the location selected by the user at block 58, e.g., at the top of the page in the visual file containing the last-spoken word in the audio file or at the previous section in the visual file, i.e., with the start of a page "n" pages earlier than the page bearing the last-spoken word of the audio file. It is to be understood that during subsequent reenergization the bookmark may be moved along with play of the audio file so that it is always in a current location. Or, the bookmark location need not be continuously updated, and moved to the appropriate location only upon receipt of a deenergization signal.

On the other hand, if a visual mode was selected the logic proceeds from decision diamond 62 to block 70 to play the visual file by presenting the text from the visual file on the display 26. The user may scroll through the text using principles known in the art to read the visual file. At block 72 bookmark is placed at the correct page or sentence in the audio file at power-down or is updated continuously in the audio file in accordance with principles noted above. Using the data structure shown in Figure 5, the bookmark may be placed in the audio file at the start of the sentence (or section) that contains the text of the visual file that was presented on the display 26 at power-down or upon receipt of a signal to change mode to audio. Thus, the bookmark is not necessarily placed at the word in the audio file corresponding to the last-highlighted or presented word of the visual file, but rather at the beginning of the sentence of the audio file containing the last displayed word regardless of where that word happens to be in the sentence.

In this way, if a visual file has control of the bookmark, it can move the bookmark to the corresponding sentence beginning in the audio file, so that the audio file doesn't annoyingly start mid-word or mid-sentence. In contrast, if the audio file has control of the bookmark, the placement of the bookmark in the visual can be less selective, e.g., the bookmark is placed at the start of the page of the visual file containing the last-spoken word or even a few pages earlier as described above.

While a particular electronic book is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. Electronic book comprising:
a housing;
a visual display supported on the housing;
at least one audio output device on the housing;
a digital processor in the housing and communicating with the visual display and audio output device;
a tangible computer-reader storage medium in the housing and accessible to the processor, electronic book files being stored on the medium for presentation of book information under control of the processor, the processor executing logic comprising:
receiving a user selection to play both an audio file and a visual file simultaneously, both files being associated with an electronic book, one of the audio file and visual file establishing a first file and the other of the audio file and visual file establishing a second file, wherein a user can listen to the audio file while reading the visual file;
the first file maintaining control of a bookmark in the first files such that that if the user skips ahead in the second file, the first file maintains a bookmark at a location in the first file being played when a "skip" signal is received in the second file.

2. The electronic book of Claim 1, wherein the audio file is by default established to be the first file.

3. The electronic book of Claim 1, wherein a user is given a choice to select which file is the first file that maintains control of the bookmark.

4. The electronic book of Claim 1, wherein the page in the visual file corresponding to the last-spoken word in the audio file is a page "n" pages prior to the page in the video file containing the last-spoken word, wherein "n" is an integer.

5. Electronic book comprising:
a housing;
a visual display supported on the housing;
at least one audio output device on the housing;
a digital processor in the housing and communicating with the visual display and audio output device; and
a tangible computer-reader storage medium in the housing and accessible to the processor, electronic book files being stored on the medium for presentation of book information under control of the processor, the medium storing a data structure accessible to the processor synchronizing an audio file with a related visual file at least in part by indexing each text segment in the visual file with a start of a nearest sentence in the audio file containing text in the segment of the visual file, wherein a text segment comprising the first "n" words in the visual file is linked to the start of the first sentence in the audio file, the next (n through m) words in the visual file are linked to a start of a second sentence in the audio file, such that each and every word in the visual file need not be linked to a respective unique word in the audio file, but instead groups of words in the visual file are linked as a group to a single place in the audio file.

6. The electronic book of Claim 5, wherein the processor executes logic comprising:
receiving a user selection of a format in which to present an electronic book;
in response to a selection of an audio format, playing an audio file corresponding to a selected electronic book on the audio output device and establishing a bookmark in a visual file corresponding to the selected audio file at a top of a page in the visual file corresponding to a last-spoken word in the audio file;
in response to a selection of a visual mode, presenting text from a visual file corresponding to a selected electronic book on the display and establishing a bookmark in an audio file corresponding to the selected video file at the start of a sentence in the audio file containing the text of the visual file that was presented on the display upon receipt of a signal to change mode or power down such that the corresponding audio file does not subsequently start mid-sentence upon invocation of the electronic book in the audio format.

7. The electronic book of Claim 1 or claim 6" wherein an audio file being played has control of the bookmark in the corresponding video file.

8. The electronic book of Claim 1 or claim 6, wherein a video file being played has control of the bookmark in the corresponding audio file.

9. The electronic book of Claim 1 or claim 6, wherein the user can select a page location in the visual file to bookmark when an audio file is terminated.

10. The electronic book of Claim 1 or claim 6, wherein the page in the visual file corresponding to the last-spoken word in the audio file is the page containing the last-spoken word.

11. The electronic book of Claim 6, wherein the page in the visual file corresponding to the last-spoken word in the audio file is a page "n" pages prior to the page in the video file containing the last-spoken word, wherein "n" is an integer.

12. The electronic book of Claim 6, wherein if a user skips material in the visual file while the audio file is active, the audio file maintains a bookmark at a location in the audio file being played when a "skip" signal is received.

13. Electronic book comprising:
a housing;
a visual display supported on the housing;
at least one audio output device on the housing;
a digital processor in the housing and communicating with the visual display and audio output device; and
a tangible computer-reader storage medium in the housing and accessible to the processor, electronic book files being stored on the medium for presentation of book information under control of the processor, wherein visual segments in a visual file are correlated to respective starts of respective sentences in an audio file corresponding to the visual segments so that if a user switches from visual mode to audio mode the audio mode does not start mid-sentence, each segment in the audio file being linked to a start of a page in the visual file such that the bookmark is not symmetric.

14. The electronic book of Claim 13, wherein the processor executes logic comprising:
in response to a selection of an audio format, playing an audio file corresponding to a selected electronic book on the audio output device and establishing a bookmark in a visual file corresponding to the selected audio file at a top of a page in the visual file corresponding to a last-spoken word in the audio file;
in response to a selection of a visual mode, presenting text from a visual file corresponding to a selected electronic book on the display and establishing a bookmark in an audio file corresponding to the selected video file at the start of a sentence in the audio file containing the text of the visual file that was presented on the display upon receipt of a signal to change mode or power down such that the corresponding audio file does not subsequently start mid-sentence upon invocation of the electronic book in the audio format.

15. The electronic book of Claim 13, wherein electronic book files are stored on the medium for presentation of book information under control of the processor, the medium storing a data structure accessible to the processor synchronizing an audio file with a related visual file at least in part by indexing each text segment in the visual file with a start of a nearest sentence in the audio file containing text in the segment of the visual file, wherein a text segment comprising the first "n" words in the visual file are linked to the start of the first sentence in the audio file, the next (n through m) words in the visual file are linked to a start of a second sentence in the audio file, such that each and every word in the visual file need not be linked to a respective unique word in the audio file, but instead groups of words in the visual file are linked as a group to a single place in the audio file.
